(19) **Europäisches Patentamt**

**European Patent Office**

**Office européen des brevets**

(11) **EP 1 468 338 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(21) Anmeldenummer: **03702452.8**

(22) Anmeldetag: **15.01.2003**

(51) Int Cl.:
*G05B 17/02* (2006.01)

(86) Internationale Anmeldenummer:
**PCT/EP2003/000371**

(87) Internationale Veröffentlichungsnummer:
**WO 2003/062933 (31.07.2003 Gazette 2003/31)**

(54) **VORRICHTUNG UND VERFAHREN ZUR SIMULATION VON PRODUKTIONSPROZESSEN, INSBESONDERE VON OBERFL CHENBEHANDLUNGSVERFAHREN**

DEVICE AND METHOD FOR SIMULATING PRODUCTION PROCESSES, PARTICULARLY SURFACE-TREATING METHODS

DISPOSITIF ET PROCEDE DE SIMULATION DE PROCESSUS DE PRODUCTION, EN PARTICULIER DE PROCEDES DE TRAITEMENT DE SURFACE

(84) Benannte Vertragsstaaten:
**AT BE BG CH CY CZ DE DK EE ES FI FR GB GR HU IE IT LI LU MC NL PT SE SI SK TR**

(30) Priorität: **23.01.2002 DE 10202818**

(43) Veröffentlichungstag der Anmeldung:
**20.10.2004 Patentblatt 2004/43**

(73) Patentinhaber: **CAD-FEM GmbH**
**85567 Grafing (DE)**

(72) Erfinder: **ROTHER, Klemens**
**85591 Vaterstetten (DE)**

(74) Vertreter: **Jehle, Volker Armin et al**
**Patentanwälte**
**Bosch, Graf von Stosch, Jehle,**
**Flüggenstrasse 13**
**80639 München (DE)**

(56) Entgegenhaltungen:
| | |
|---|---|
| **EP-A- 0 415 637** | **EP-A- 0 435 215** |
| **US-A- 4 866 663** | **US-A- 4 965 743** |
| **US-A- 5 495 417** | **US-A- 5 521 477** |
| **US-A- 5 797 288** | |

# EP 1 468 338 B1

## Beschreibung

Die Erfindung betrifft eine Vorrichtung und ein Verfahren zur Simulation von Oberflächenbehandlungs prozessen.

Bei der Fertigung von z.B. Fahrzeugen, insbesondere Kraftfahrzeugen werden die Karosserie-Oberflächen mit Hilfe von Verfahren behandelt, welche im Allgemeinen eine Vielzahl verschiedener Schritte umfassen.

Zunächst wird die Karosserie - gegebenenfalls in mehreren Stufen - gründlich gereinigt. Z.B. wird die Karosserie zunächst vorgereinigt, dann entfettet, gespült, phosphatiert, usw. Dabei können z.B. entsprechende Spritz- und/oder Tauchentfettungsverfahrensschritte durchgeführt werden bzw. kann die Karosserie in ein oder mehrere Reinigungsbekken eingetaucht werden.

Dann wird die Karosserie z.B. in ein Bad, beispielsweise ein Farbbad eingetaucht, wo z.B. mittels eines kathodischen Abscheideverfahrens, z.B. eines kathodischen Tauchlackierungsverfahrens, eine (erste) Beschichtung bzw. ein (erster) Überzug auf die Karosserie aufgebracht wird, z.B. eine Grundlackschicht.

Daraufhin wird die aufgebrachte Beschichtung bzw. der Überzug in einem Ofen ausgehärtet bzw. getrocknet, und dann die Karosserie wieder abgekühlt.

Als nächstes wird - z.B. durch Eintauchen in ein weiteres Bad, oder auf beliebige andere Weise, z.B. mittels entsprechender Sprühtechniken, beispielsweise einem elektrostatischen Lackierverfahren- eine weitere Beschichtung, z.B. eine (weitere) Lackschicht, beispielsweise eine Farb- bzw. Decklackschicht auf die Karosserie aufgebracht

Die aufgebrachte Beschichtung bzw. der Überzug wird dann in einem weiteren Ofen ausgehärtet bzw. getrocknet, und dann die Karosserie wieder abgekühlt, usw.

Bei den o.g. zur Behandlung der Karosserie-Oberflächen vorgesehen Schritten können eine Vielzahl von Problemen auftreten:

Beispielsweise sind, um Zeit und Kosten zu sparen, an den o.g. Öfen z.B. Düsen, Schwarzstrahler, etc. vorgesehen, die für eine relativ schnelle Erwärmung der Karosserie auf die zur Aushärtung bzw. Trocknung erforderliche Temperatur sorgen. Diese kann z.B. in einem vorgebebenen Temperaturbereich, z.B. zwischen 165°C und 195°C liegen, d.h. ca. 180°C ($\pm$15°C) betragen.

Um eine ordnungsgemäße Aushärtung bzw. Trocknung zu gewährleisten, muß diese Temperatur für eine vorbestimmte Zeitdauer, z.B. 15 Minuten lang, aufrechterhalten werden (Aushärte- bzw. Trocknungszeitdauer).

Es kann zu Qualitätseinbußen der aufgebrachten Beschichtung bzw. des Überzugs kommen, wenn während der o.g; z.B. ca. 15 Minuten lang andauernden Aushärte- bzw. Trocknungsperiode z.B. die untere Grenze des o.g. Temperaturbereichs eine bestimmte Zeit lang unterschritten wird (die Karosserietemperatur z.B. 10 Minuten lang lediglich 160°C beträgt), oder z.B. die obere Grenze des o.g. Temperaturbereich eine bestimmte Zeit lang überschritten wird (die Karosserietemperatur z.B. 5 Minuten lang 200°C beträgt).

Besonders kritisch ist die Aufwäimphase. Einerseits sollte z.B. die Temperatur der zirkulierenden Luft hier möglichst hoch sein, damit sich die Karosserie möglichst schnell erwärmen kann, wodurch die Herstellzeit vetkürzt, und die Herstellkosten verringert werden. Andererseits kann eine zu hohe Temperatur der zirkulierenden Luft dazu fuhren, dass - noch bevor z.B. die gegenüber der zirkulierenden Luft weniger stark exponierten Karosserieflächen die o.g. Aushärtungs- bzw. Trocknungstemperatur (bzw. zumindest die untere Grenze des Aushärtungs- bzw. Trocknungstemperaturbereichs) erreichen - die Temperatur von gegenüber der zirkulierenden Luft relativ stark exponierten Karosserieflächen, z.B. die Karosserieaußenflächen, zu stark ansteigt (z.B. deren Temperatur die obere Grenze des Aushärtungs- bzw. Trocknungstemperaturbereichs überschreitet).

Dieses einfache Beispiele verdeutlicht, wie wichtig es ist, im jeweiligen Ofen die Prozeßparameter (Temperatur des Ofens, Dauer der Aushärte- bzw. Trocknungsperiode, etc.) optimal einzustellen.

Im Stand der Technik ist bekannt, die optimalen Prozessparameter durch eine "Trial and Error"-Methode, d.h. empirisch zu ermitteln. Hierbei werden - unter Verwendung von Karosserie-Prototypen - zahlreiche Versuche durchgeführt. Nach jedem Versuch werden die Prozessparameter geändert, bis ein hinsichtlich Qualität und Produktionszeit bzw. Produktionskosten befriedigendes Ergebnis erreicht wird.

Eine derartige "Trial and Error"-Methode ist zeitaufwändig und teuer.

Wird z.B. die Form der Karosserien, deren Oberflächen behandelt werden sollen, geändert, muß eine komplett neue Test-Schleife durchlaufen werden.

Die US 5 797 288 zeigt ein Simulationsmodell für den Betrieb einer Walzstrasse, wobei das Simulationsmodell aus mehreren Untermodellen besteht und wobei die einzelnen Untermodelle Signale von einem Zentralrechner oder von anderen Untermodellen erhalten.

Der Erfindung liegt die Aufgabe zugrunde, eine neuartige Vorrichtung und ein neuartiges Verfahren zur Simulation von Produktionsprozessen, insbesondere von Oberflächenbehandlungsverfahren bereitzustellen.

Sie erreicht dieses und weitere Ziele durch die Gegenstände der Ansprüche 1 und 10.

Vorteilhafte Weiterbildungen der Erfindung sind in den Unteransprüchen angegeben.

Gemäß einem Grundgedanken der Erfindung wird ein Verfahren zur Simulation von Produktionsprozessen, insbesondere von Oberflächenbehandlungsverfahren bereitgestellt, wobei an einem Körper, z.B. einer Karosserie nacheinander mehrere, verschiedene Produktionsprozess-Teilschritte vorgenommen werden, und wobei mindesten ein bei der Simulation des bei einem ersten Produktionsprozess-Teilschritts ermittelter Parameter zur Simulation eines zweiten Produktionsprozess-Teilschritts verwendet wird (Anspruch 1).

Im folgenden wird die Erfindung unter Bezug auf ein Ausführungsbeispiel und die beigefügte Zeichnung näher erläutert In der Zeichnung zeigt:

Figur 1 eine schematische Darstellung eines Abschnitts einer Fertigungsstraße, bei welcher in mehreren, aufeinanderfolgenden Stufen eine Oberflächenbehandlung von Fahrzeugkarosserien vorgenommen wird;

Figur 2 eine schematische Darstellung eines in der in Figur 1 gezeigten Aushärtungs- bzw. Trocknungs-Stufe vorgesehenen Ofens;

Figur 3 eine schematische Darstellung von zur Simulation verwendeten Karosserieflächen-Elementen eines Fahrzeugkarosserie-Rechennetzes; und

Figur 4 eine schematische Darstellung des Aufbaus und der Funktion des zur Simulation der Oberflächenbehandlungs-Prozesse verwendeten Softwareprogramms.

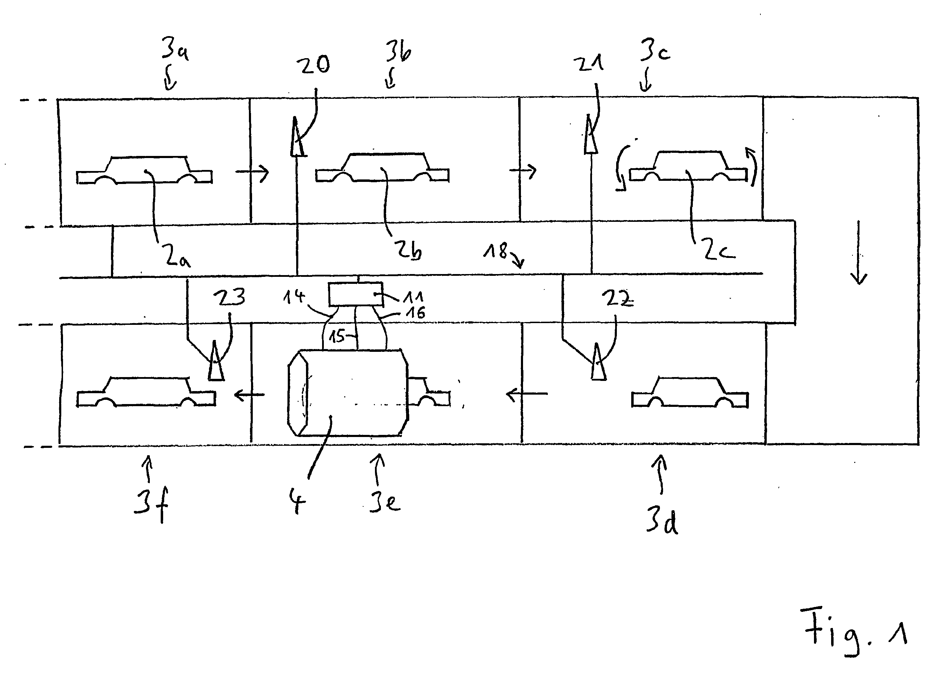

In Figur 1 ist eine schematische Darstellung eines Abschnitts einer Fertigungssttaße 1 gezeigt, bei welcher in mehreren, aufeinanderfolgenden Stufen 3a, 3b, 3c, 3c, 3d, 3e, 3f eine Oberflächenbehandlung von Fahrzeugkarosserien 2a, 2b, 2c vorgenommen wird.

Die Fahrzeugkarosserien 2a, 2b, 2c weisen alle im wesentlichen die gleiche Form auf, und werden - wie hier durch entsprechende Pfeile veranschaulicht - z.B. mit Hilfe eines Fließbands vollautomatisch zunächst zur ersten Bearbeitungs-Stufe 3a, von dort aus weiter zur zweiten Bearbeitungs-Stufe 3b, zur dritten Bearbeitungs-Stufe 3c, und dann zu den weiteren Bearbeitungs-Stufen 3d, 3e, 3f befördert, usw.

In den Bearbeitungs-Stufen 3a, 3b - und gegebenenfalls in weiteren, hier nicht gezeigten Bearbeitungsstufen - werden die Fahrzeugkarosserien 2a, 2b, 2c gründlich gereinigt. Z.B. wird die jeweilige Fahrzeugkarosserie 2a, 2b, 2c, insbesondere das Karosserieinnere zunächst in der Bearbeitungs-Stufe 3a vorgereinigt, und dann in der Bearbeitungs-Stafen 3b - und gegebenenfalls in weiteren, hier nicht gezeigten Bearbeitungsstufen - spritzentfettet, tauchentfettet, gespült, phosphatiert, passiviert, usw.

Zur Durchführung eines entsprechenden Reinigungsschritts können einige der o.g. Bearbei tungs-Stufen 3a, 3b z.B. entsprechende Wannen bzw. Becken aufweisen, die mit einer Reinigungsffüssigkest gefüllt ist, in die die Fahrzeugkarosserien 2a, 2b, 2c z.B. mit Hilfe entsprechender Roboter 20 nacheinander zur Reinigung ein- und dann wieder ausgetaucht werden.

Nachdem die Fahrzeugkarosserien 2a, 2b, 2c gereinigt wurden, werden sie von den entsprechenden Reinigungs-Bearbeitungs-Stufen 3a, 3b aus einer weiteren Beatbeitungs-Stufe 3c zugeführt, wo die Fahrzeugkarosseden 2a, 2b, 2c - z.B. mittels eines Roboters 21 - hin- und hergekippt bzw. hin- und hergedreht werden, z.B. um möglichst weitgehend die ggf. noch auf der Karossetieoberfläche bzw. in Karosseriehohlräumen vorhandene Reinigungsflüssigkeit zu entfernen.

Daraufhin wird die jeweilige Fahrzeugkarosserie 2a, 2b, 2c einer weiteren Bearbeitungs-Stufe 3d zugeführt, in der die (in den Bearbeitungs-Stufen 3a, 3b, etc. gereinigte) Oberfläche der jeweiligen Fahrzeugkarosserie 2a, 2b, 2c einer entsprechenden Verarbeitung unterzogen wird.

Hiexzu wird die entsprechende Fahrzeugkarosserie 2a, 2b, 2c mittels eines Roboters 22 z.B. in ein (Lack-)Bad bzw. ein (Lack-)Becken ein-, und dann wieder ausgetaucht, insbesondere in ein Bad, in welchem mittels eines kathodischen Abscheideveifahrens (z.B. eines Electto Deposition Coating-Verfahrens) eine (erste) Beschichtung bzw. ein (erster) Überzug auf die Karosserie aufgebracht wird, z.B. eine Grundlaclcschicht oder eine beliebige andere Beschichtung.

Bei dem hier verwendeten kathodischen Abscheideverfahren kann es sich z.B. ein kathodisches Tauchlackierungsverfahren handeln.

Vor der Zufuhr der Fahrzeugkarosserien 2a, 2b, 2c zur Bearbeitungs-Stufe 3d können - in weiteren, hier nicht dargestellten Bearbeitungs-Stufen - die Fahrzeugkarosserien 2a, 2b, 2c z.B. entsprechenden Spritz- und/oder Tauchspülprozessen, usw. unterzogen werden.

In der Bearbeitungs-Stufe 3d können auch beliebige andere Oberflächen-Bearbeitungsverfahren, als die oben genannten durchgeführt werden, z.B. können entsprechende Lacke auf die Fahrzeugkarosserie 2a, 2b, 2c aufgesprüht werden, etc.

Nach dem Aufbringen der (Grundlack-)Schicht in der Bearbeitungs-Stufe 3d werden die Fahrzeugkarosserien 2a, 2b, 2c einer weiteren (hier nicht dargestellten) Bearbeitungs-Stufe zugeführt, wo die Fahrzeugkarosserien 2a, 2b, 2c - z.B. mittels eines Roboters - hin- und heigekippt bzw. hin- und hergedreht werden, z.B. um möglichst weitgehend überschüssigen, auf der Karosserieoberfläche bzw. in Katosseriehohlräumen vorhandenen, Lack zu entfernen.

Daraufhin wird die in der Beatbeitungs-Stufe 3d aufgebrachte (zunächst noch ffüssige) Beschichtung bzw. (Lack-)Schicht in einer Bealbeitungs-Stufe 3e einem Ofen 4 ausgehärtet bzw. getrocknet.

Als nächstes wird die entsprechende Fahrzeugkarosserie 2a, 2b, 2c einer weiteren, hier nicht dargestellten Bearbeituags-Stufe zugeführt, wo die jeweilige Fahrzeugkarosserie 2a, 2b, 2c - z.B. mittels entsprechender Kühlaggregate - abgekühlt wird.

Als nächstes kann die entsprechende Fahrzeugkarosserie 2a, 2b, 2c einer beliebigen weiteren Bearbeitungs-Stufe zugeführt werden, z.B. einer weiteren Reinigungs- und/oder Oberflächen-Bearbeitungs-Stufe 3f, usw.

Beispielsweise wird in der Bearbeitungs-Stufe 3f - z.B. durch Eintauchen in ein weiteres Bad, oder auf beliebige andere Weise, z.B. mittels entsprechender Sprühtechniken, beispielsweise einem elektrostatischen Lackierverfahren - eine weitere Beschichtung, z.B. eine (weitere) Lackschicht, beispielsweise eine Farb- bzw. Decklackschicht auf die Fahrzeugkarosserie 2a, 2b, 2c aufgebracht. Bei einem elektrostatischen Lackierverfahren wird mittels entsprechender Roboter 23 Lack auf die Karosserieoberfläche aufgesprüht, wobei das Aufsprühen dadurch unterstützt wird, dass entsprechende elektrische Felder erzeugt werden.

Daraufhin wird die in der Bearbeituags-Stufe 3f aufgebrachte (zunächst noch flüssige) Beschichtung bzw. (Lack-)Schicht in einer weiteren Bearbeitungs-Stufe mit einem dem in Figur 1 gezeigten Ofen 4 entsprechenden Ofen ausgehärtet bzw getrocknet.

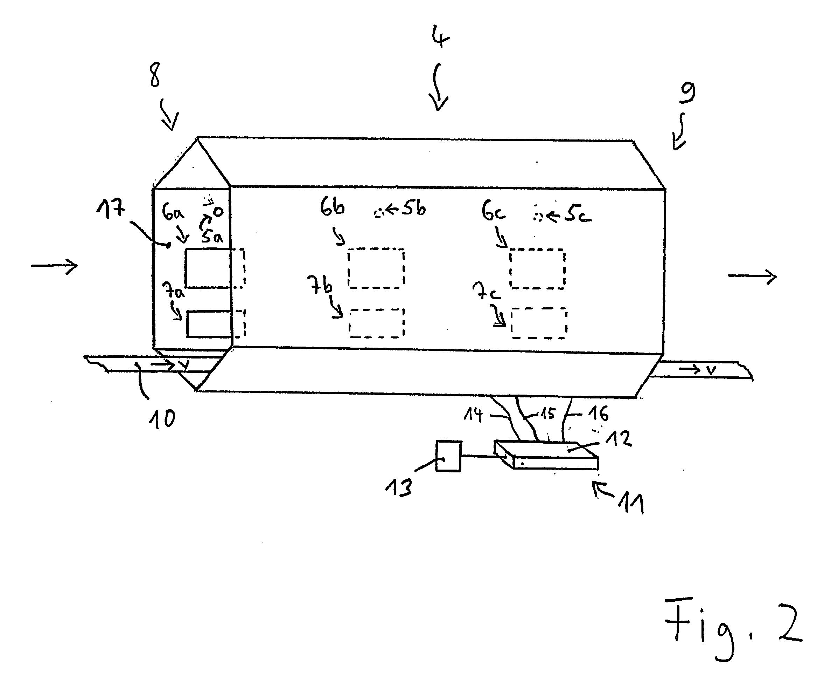

In Figur 2 ist eine schematische, aus Anschauungsgründen vereinfachte Darstellung des in der in Figur 1 gezeigten Aushärtungs- bzw. Trocknungs-Stufe 3e vorgesehenen Ofens 4 gezeigt.

Der Ofen 4 ist im wesentlichen röhrenf'tirmig ausgestaltet, und weist an seiner Innenwand 17 mehrere aktive, d.h. beheizte Süahl&chen 6a, 6b, 6c, mehrere (passive, nicht beheizte) SchwarzstraM-Flächen 7a, 7b, 7c, sowie mehrere Düsen 5a, 5b, 5c auf (von den Außenwänden des Ofens 4 verdeckte Abschnitte der Strahlflächen 6a, 6b, 6c, 7a, 7b, 7c bzw. Düsen 5a, 5b, 5c sind hier gestrichelt dargestellt).

Am Eingangsbereich 8 und am Ausgangsbereich 9 des Ofens 4 sind - hier nicht dargestellte - Schleusen angebracht. Diese verhindern, dass - nachdem die Fahrzeugkarosserie 2a, 2b, 2c durch die entsprechende Schleuse in den Ofen 4 eingeführt wurde - die im Ofen 4 befindliche Luft aus dem Ofeninnem nach Außen hin entweichen kann.

Die aktiven Strahlflächen 6a, 6b, 6c werden auf eine relativ hohe Temperatur, die bei mehr als 500°C liegen kann, aufgeheizt. Sie dienen zum einen dazu, die im Ofen vorhandene Luft zu erwärmen (und damit indirekt mittels Konvektion bzw. Warmeströmung auch die jeweilige Fahrzeugkarosserie 2a, 2b 2c). Zum anderen wird durch die von den aktiven Strahlflächen 6a, 6b, 6c abgegebene Wärmestrahlung auch eine direkte - auf Strahlungsabsorption beruhende - Erwärmung der jeweiligen Fahrzeugkarosserie 2a, 2b 2c erreicht.

Um eine relativ schnelle Erwärmung der jeweiligen Fahrzeugkarosserie 2a, 2b 2c zu erreichen, und damit die Hetstellzeit und die Herstellkosten zu verringern, sind am Ofen zusätzlich die bereits erwähnten passiven, nicht beheizten Schwarzsttahl-Flächen 7a, 7b, 7c, sowie die o.g Düsen 5a, 5b, 5c vorgesehen.

Die Düsen 5a, 5b, 5c erzeugen jeweils einen in Richtung des Ofeninnern gerichteten Luftstrom. Dadurch wird erreicht, dass insgesamt ein erhöhter auf Konvektion bzw. Wärmeströmung beruhender Wärmetransport auftritt: Zusätzlich zu einem durch Temperatur- und damit Dichteunterschiede der Luft verursachte Strömung (freie Konvektion) tritt nämlich aufgrund der Düsen 5a, 5b, 5c zusätzlich auch eine sog. erzwungene Wärmeströmung bzw. erzwungene Konvektion auf.

Durch die von den passiven Schwarzstrahl-Flächen 7a, 7b, 7c abgegebene Wärmestrahlung wird eine zusätzliche, auf Strahlungsabsorption beruhende Erwärmung der jeweiligen Fahrzeugkarosserie 2a, 2b 2c erreicht

Gemäß dem Gesetz von Stefan und Boltzmann kann die von der jeweiligen Schwarzstrahl-Fläche 7a, 7b, 7c, die von den beheizten Strahlflächen 6a, 6b, 6c, sowie z.B. die von der Fahrzeugkarosserie 2a, 2b 2c bzw. einem finiten Karosserieflächen-Element 24, 25, 26 bzw. einer "Zelle" (siehe unten) abgestrahlte bzw. aufgenommene Energie durch folgende Formel beschrieben werden:

$$P_S = \varepsilon_S \sigma A_S \left( T_S^{\,4} - T_U^{\,4} \right) \qquad \qquad \text{(Formel (1))}$$

Dabei ist $P_S$ die von der jeweiligen Strahlfläche 6a, 6b, 6c, 7a, 7b, 7c bzw. die von einem finiten Karosserieflächen-Element abgestrahlte bzw. aufgenommene Energie, $A_S$ die Größe der jeweiligen Fläche, $T_S$ die Temperatur der jeweiligen Fläche, $T_U$ die Umgebungstemperatur, $\sigma$ eine Proportionalitätskonstante ($\sigma = 5{,}670 \times 10^8$ W m$^{-2}$ K$^{-4}$), und $\varepsilon_S$ der Emissionsgrad der jeweiligen Fläche.

Des weiteren kann der Mittels Konvektion erreichte Wärmestrom dQ/dt z.B. zwischen der die jeweilige Fahrzeugkarosserie 2a, 2b, 2c umgebenden Luft, und der entsprechenden Fahrzeugkarosserie 2a, 2b, 2c bekanntermaßen wie folgt berechnet werden:

$$dQ/dt = (T_U - T_K)\,\alpha\,A_K \qquad\qquad \text{(Formel (2))}$$

Dabei ist $A_K$ die Größe der jeweiligen Karosseriefläche (bzw. die Größe der jeweils betrachteten Fläche des jeweiligen finiten Karosserieflächen-Elements 24, 25, 26 bzw. der jeweiligen "Zelle" (siehe unten)), $T_K$ die Temperatur der Karosseriefläche bzw. des jeweiligen finiten Karosserieflächen-Elements, $T_U$ die Umgebungstemperatur, und $\alpha$ die jeweils geltende WärmeübergangszahL

Wie in Figur 2 weiter gezeigt ist, werden die Fahrzeugkarosserien 2a, 2b, 2c mittels einer Fördereinrichtung 10, z.B. einem Förderband in den Ofen 4 eingeführt, und - entsprechend der Förderbandgeschwindigkeit - mit einer Vorschubgeschwindigkeit v durch den Ofen 4 hindurchtransportiert. Die Vorschubgeschwindigkeit v der Fahrzeugkarosserien 2a, 2b, 2c durch den Ofen 4 wird von einer Steuereinrichtung 11 eingestellt, z.B. einem Rechner 12, auf dessen Speichereinrichtung 13 ein entsprechendes Steuer-Softwareprogramm abgespeichert (Computerprogrammprodukt).

Die Steuereinrichtung 11 (bzw. das Steuer-Softwateprogramm) steuert neben der Vorschubgeschwindigkeit v (d.h. deren Höhe und gegebenenfalls deren zeitlichen Verlauf) - und damit der Vetvveil-Zeitdauer der Fahrzeugkarosserien 2a, 2b, 2c im Ofen 4 bzw. der Dauer der Aushärte- bzw. Troclmungsperiode - alternativ zusätzlich u.a. noch die folgenden Parameter des Trocknungs- bzw. Aushärtevorgangs: Beheizung der aktiven Strahlflächen 6a, 6b, 6c (und damit - indirekt - Höhe und zeitlicher Verlauf der Strahlflächen Temperatur $T_S$), und/oder die Stärke des von den Düsen 5a, 5b, 5c erzeugten Luftstroms, etc.

Zur Steuerung der Beheizung der Strahlflächen 6a, 6b, 6c, d.h. genauer: zur Steuerung von den aktiven Strahlflächen 6a, 6b, 6c zugeordneten Heizelementen ist die Steuereinrichtung 11 über entsprechende Steuerungsleitungen 14 bzw. alternativ einem Steuerungs-Datenbus mit den jeweiligen Heizelementen verbunden, so dass der durch entsprechende Heizdrähte der Heizelemente fließende Strom - und damit die Stärke der von Heizdrähten an die Strahlfächen 6a, 6b, 6c abgegebenen Wärmeenergie - eingestellt werden kann.

Auf entsprechende Weise ist die Steuereinrichtung 11 mittels weiterer Steuerleitungen 15 (oder dem o.g. Steuerungs-Datenbus) mit entsprechenden Antriebselementen, z.B. Elektromotoren der Fördereinrichtung 10 verbunden, so dass der durch die Elektromotoren fließende Strom, und dadurch deren Drehzahl eingestellt werden kann (und damit - indirekt - die Vorschubgeschwindigkeit v der Fahrzeugkarosserien 2a, 2b, 2c im Ofen 4).

Optional kann die Steuereinrichtung 11 zusätzlich z.B. mittels entsprechender weiterer Steuerungsleitungen 16 (oder z.B. dem o.g. Steuerungs-Datenbus) mit den Düsen 5a, 5b, 5c verbunden sein, so dass die Stärke des von den Düsen 5a, 5b, 5c erzeugten Luftstroms eingestellt werden kann, usw.

Bei einer weiteren Alternative sind in dem Ofen 4 zusätzlich ein oder mehrere, von der Steuereindchtung 11 gesteuerte UV-Strahler vorgesehen, die für eine weiter beschleunigte Aushärtung bzw. Trocknung der Fahrzeugkatosserien 2a, 2b, 2c im Ofen 4 sorgen.

Wie in Figur. 1 gezeigt ist, kann die Steuereinrichtung 11 des weiteren z.B. über den o.g. Steuerungs-Datenbus (hier: den Steuerungs-Datenbus 18) mit der Bearbeitungs-Stufe 3a und/oder der Bearbeitungs-Stufe 3b und/oder der Bearbeitungs-Stufe 3c und/oder der Bearbeitungs-Stufe 3d und/oder der Bearbeitungs-Stufe 3e und/oder der Bearbeitungs-Stufe 3f und/oder einer oder mehreren zwischen bzw. vor oder nach diesen Bearbeitungs-Stufen 3a, 3b, 3c, 3d, 3e, 3f angeordneten Bearbeituags-Stufen verbunden sein, und die entsprechenden Parameter der dort stattfindenden Karosserieoberflächen-Behandlungsprozesse entsprechend steuern (z.B. durch entsprechendes Ansteuern von Robotern 20, 21, 22, 23, etc.). Alternativ können die entsprechenden Prozessparameter der Bearbeitungs-Stufen 3a, 3b, 3c, 3d, 3e, 3f auch durch eine oder mehrere separate Steueieintichtungen separat voneinander gesteuert werden.

Beispielsweise kann durch die entsprechende Steuereinrichtung 11 in den Reinigungs-Bearbeitungs-Stufen 3a, 3b z.B. die Eintauchgeschwindigkeit der Fahrzeugkarosserie 2a, 2b, 2c in die entsprechende Reinigungs Wanne gesteuert werden (insbesondere die Höhe und der zeitliche Verlauf der in vertikaler Richtung nach unten weisenden Geschwindigkeits-Komponente), und/oder die Austauchgeschwindigkeit (insbesondere die Höhe und der zeitliche Verlauf der in vertikaler Richtung nach oben weisenden Geschwindigkeits-Komponente), und/oder die Vorschubgeschwindigkeit innerhalb der Wanne (d.h. die Höhe und der zeitliche Verlauf der horizontal in Richtung der nächsten Bearbeitungs-Stufe 3c weisenden Geschwindigkeits-Komponente).

Alternativ oder zusätzlich kann durch die (jeweilige) Steuereinrichtung 11 z.B. durch entsprechendes Ansteuern des Roboters 21 der in der Bearbeitungs-Stufe 3c stattfindende Fahrzeugkarosserie-Kippvorgang gesteuert werden (insbesondere die Höhe und der zeitliche Verlauf einer - auf einer vertikalen Ebene liegenden - Kipp-Geschwindigkeits-Komponente, und/oder die Höhe und der zeitliche Verlauf einer überlagerten - auf einer horizontalen Ebene liegenden - Dreh-Geschwindigkeits-Komponente, und/oder die Höhe und der zeitliche Verlauf einer überlagerten Vorschubgeschwindigkeit, etc.).

Des weiteren kann durch die entsprechende Steuereinrichtung 11 z.B. alternativ oder zusätzlich durch entsprechendes Ansteuern des Roboters 22 der in der Beschichtungs-Bearbeitungs-Stufe 3d stattfindende Tauchvorgang in das entsprechende (Lack-)Becken gesteuert werden, z.B. die Eintauchgeschwindigkeit der Fahrzeugkarosserie 2a, 2b, 2c in das entsprechende Becken (insbesondere die Höhe und der zeitliche Verlauf der in vertikaler Richtung nach unten weisenden Geschwindigkeits-Komponente), und/oder die Austauchgeschwindigkeit (insbesondere die Höhe und der zeitliche Verlauf der in vertikaler Richtung nach oben weisenden Geschwindigkeits-Komponente), und/oder die Vorschubgeschwindigkeit innerhalb des Beckens (d.h. die Höhe und der zeitliche Verlauf der horizontal in Richtung der nächsten Bearbeitungs-Stafe 3e weisenden Geschwindigkeits-Komponente).

Alternativ oder zusätzlich kann durch die (jeweilige) Steuereinrichtung 11 z.B. durch Ansteuern des entsprechenden Roboters der nach der Bearbeitungs-Stufe 3d stattfindende Fahrzeugkarosserie-Kippvorgang gesteuert werden (insbesondere die Höhe und der zeitliche Verlauf einer - auf einer vertikalen Ebene liegenden - Kipp-Geschwindigkeits-Komponente, und/oder die Höhe und der zeitliche Verlauf einer überlagerten - auf einer horizontalen Ebene liegenden - Dreh-Geschwindigkeits-Komponente, und/oder die Höhe und der zeitliche Verlauf einer überlagerten Vorschubgeschwindigkeit, etc.), usw.

Im Ofen 4 (sowie in den weiteren, hier nicht dargestellten Öfen) soll die jeweilige Fahrzeug karosserie 2a, 2b, 2c relativ schnell auf die zur Aushärtung bzw. Trocknung erforderliche Temperatur erwärmt werden. Diese kann z.B. in einem vorgebebenen Temperaturbereich, z.B. zwischen 165°C und 195°C liegen, d.h. ca. 180°C ($\pm$15°C) betragen.

Um eine ordnungsgemäße Aushärtung bzw. Trocknung zu gewährleisten, muß diese Temperatur für eine vorbestimmte Zeitdauer, z.B. 15 Minuten lang, aufrechterhalten werden (Aushärte- bzw. Trocknungszeitdauer).

Es kann zu Qualitätseinbußen der aufgebrachten Beschichtung bzw. (Lack-)Schicht kommen, wenn die jeweilige Fahrzeugkarosserie 2a, 2b, 2c bzw. ein Abschnitt hiervon während der o.g., z.B. ca. 15 Minuten lang andauernden Aushärte- bzw. Trocknungsperiode z.B. eine bestimmte Zeit lang die untere Grenze des o.g. Temperaturbereichs unterschreitet (die Temperatur des entsprechenden Karosserieabschnitts z.B. 10 Minuten lang lediglich 160°C beträgt), oder z.B. eine bestimmte Zeit lang die obere Grenze des o.g. Temperaturbereichs überschreitet (die Temperatur des entsprechenden Karosserieabschnitts z.B. 5 Minuten lang 200°C beträgt).

Besonders kritisch ist die Aufwärmphase. Einerseits sollte z.B. die Temperatur der zirkulierenden Luft hier möglichst hoch sein, damit sich die jeweilige Fahrzeugkarosserie 2a, 2b, 2c möglichst schnell erwärmen kann, wodurch die Herstellzeit verkürzt, und die Herstellkosten verringert werden. Andererseits kann eine zu hohe Temperatur der zirkulierenden Luft dazu führen, dass - noch bevor z.B. die gegenüber der zirkulierenden Luft weniger stark (oder z.B: (fast) überhaupt nicht exponierten) Karosserieflächen, die o.g. Aushärtungs- bzw. Trocknungstemperatur (bzw. zumindest die untere Grenze des Aushärtungs- bzw. Trocknungstemperaturbereichs) erreichen, die Temperatur von gegenüber der zirkulierenden Luft relativ stark exponierten Karosserieflächen, z.B. die Karosserieaußenflächen, zu stark ansteigt (z.B. deren Temperatur die obere Grenze des Aushärtungs- bzw. Trocknungstemperaturbereichs überschreitet).

Aus diesen Gründen kann es von hohem Interesse sein, vorab festzustellen, ob - bei (vollständig, teilweise, oder im wesentlichen vorgegebenen) Prozessparamete,ta - bei einer bestimmten Fahrzeugkarosserie 2a, 2b, 2c beim Duichttansport durch den Ofen 4 die o.g. für einen qualitätsmäßig einwandfreien Aushärtungs- bzw. Trocknungsprozeß erforderlichen Karosserie-Temperatur-Bedingungen eingehalten werden. Alternativ oder zusätzlich kann es aus den o.g. Gründen wichtig sein, für den Ofen 4 die o.g. Prozeßparameter (Vorschubgeschwindigkeit v, Beheizung der aktiven Sttahltlächen 6a, 6b, 6c, etc.) optimal einzustellen.

Bei den übrigen Bearbeitungs-Stufen 3a, 3b, 3c, 3d, 3f kann die optimale Einstellung der ent sprechenden Prozessparametex z.B. aus den folgenden Gründen von Interesse sein:

Beispielsweise können beim Eintauchen der Fahrzeugkarosserie 2a, 2b, 2c in die bei der Bearbeitwigsstufe 3b vorgesehene Resnigungs Wanne Luftblasen entstehen. Diese können derart hohe Auftriebskräfte zur Folge haben, dass die Fahrzeugkarosserie 2a, 2b, 2c beschädigt wird (z.B. die Motorhaube durch eine unter der Motorhaube befindliche Luftblase verbeult wird). Außerdem kann durch Luftblasen verhindert werden, dass die Fahrzeugkarosserie 2a, 2b, 2c in ausreichendem Maß gereinigt wird.

Des weiteren kann eine entsprechend ungünstige Einstellung der Prozessparameter bei dem in der Beatbeitungsstufe 3c stattfindenden Fahrzeugkarosserie-Kippvorgang zur Folge haben, dass die ggf. noch auf der Karosserieoberfläche bzw. in Karosseriehohlräumen vorhandene Reinigungsflüssigkeit nicht in ausreichendem Maße entfernt wird.

Zudem können beispielsweise beim Eintauchen der Fahrzeugkarosserie 2a, 2b, 2c in das bei der Bearbeitungsstufe 3d vorgesehene (Lack-)Becken Luftblasen entstehen. Diese können derart hohe Auftriebskräfte zur Folge haben, dass die Fahrzeugkarosserie 2a, 2b, 2c beschädigt wird (z.B. die Motorhaube durch eine unter der Motorhaube befindliche Luftblase verbeult wird). Außerdem kann durch Luftblasen verhindert werden, dass die Fahrzeugkarosserie 2a, 2b, 2c an den entsprechenden Stellen überhaupt bzw. in ausreichendem Maß mit Lack benetzt wird.

Beim anschließenden Kippen der Fahrzeugkarosserie 2a, 2b, 2c kann eine entsprechend ungünstige Einstellung der Prozessparameter zur Folge haben, dass auf der Karosserieoberfläche bzw. in Karosseriehohlräumen vorhandener, überschüssiger Lack nicht in ausreichendem Maße entfernt wird.

Es ist denkbar, dass aufgrund ungünstiger Anordnung von in der Karosserie vorgesehenen Öffnungen der überschüssige Lack z.B. mit einer auf bestimmte, vorgegebene Weise ausgestalteten Kipp-Bearbeitungs-Stufe prinzipiell nicht bzw. nicht ausreichend entfernt werden kann.

Dieses Beispiel zeigt, daß es von hohem Interesse sein, vorab festzustellen, ob mit auf bestimmte, vorgegebene Weise ausgestalteten Bearbeitungs-Stufen 3a, 3b, 3c, 3d, 3e, 3f bei auf bestimmte, vorgegebene Weise ausgestalteten Fahrzeugkarosserie 2a, 2b, 2c überhaupt qualitätsmäßig einwandfreie Oberflächen-Behandlungsprozesse durchgeführt werden können (oder ob die Fabrzeugkarosserien 2a, 2b, 2c - z.B. durch Vorsehen zusätzlicher Katosserieöffnuagea und/oder Änderung der Lage von vorhandenen Karosserieöffnungen - geändert werden müssen, und/oder ob auf andere Weise ausgestaltete oder eingerichtete Bearbeitungs-Stufen 3a, 3b, 3c, 3d, 3e, 3f verwendet werden müssen, als ursprünglich geplant).

Dies - und/oder das optimale Einstellen der Prozessparameter bei auf vorgegebene Weise ausgestalteten Fahrzeugkarosserien 2a, 2b, 2c und Bearbeitungs-Stufen 3a, 3b, 3c, 3d, 3e, 3f-wird hier nicht (bzw. nicht ausschließlich) mit Hilfe einer "Trial and Error"-Methode (unter Verwendung von Fahrzeugkarosserie-Prototypen) erreicht.

Stattdessen wird z.B. am Rechner 12 der Steuereinrichtung 11 (oder an einem beliebigen weiteren Rechner, der nicht mit den Bearbeitungs-Stufen 3a, 3b, 3c, 3d, 3e, 3f verbunden zu sein braucht) mit Hilfe eines auf dessen Speichereinrichtung 13 oder einer beliebigen anderen Speichereinrichtung gespeicherten Simulations-Softwareprogramms (Computer-programmprodukt) eine auf einer Finite-Elemente-Methode (FEM bzw. Finite Elements Method) beruhende Simulation der Oberflächen-Behandlungs-Prozesse durchgeführt

Ziel der Simulation ist es z.B., vorab zu klären, ob bei einer bestimmten Fahrzeugkarosserie 2a, 2b, 2c mit den vorgegebenen Bearbeitungs-Stufen 3a, 3b, 3c, 3d, 3e, 3f z.B. hinsichtlich Qualität und Produktionszeit bzw. Produktionskosten akzeptable Oberflächen-BehandlungsProzesse durchgeführt werden können (altemativ oder zusätzlich kann die Simulation beispielsweise dazu dienen, vorab die Prozessparameter der Bearbeitungs-Stufen 3a, 3b, 3c, 3d, 3e, 3f so einzustellen, dass ein hinsichtlich Qualität und Produktionszeit bzw. Produktionskosten optimales Ergebnis erreicht wird).

Die ermittelten Prozessparameter bzw. die ermittelten Prozessparameter repräsentierende Daten werden dann vom Simulations-Softwateptogtamm an das Steuersoftwate-Programm übergeben (- alternativ kann die Funktion des Simulations- und des Steuersoftware-Programms z.B. auch von ein- und demselben Softwateprogramm erfüllt werden -), so dass die Steuereinrichtung 11 (bzw. das Steuer-Softwareprogramm) dann bei der Oberflächenbehandlung von reell vorhanden Fahrzeugkatosserien 2a, 2b, 2c die entsprechenden Prozesse entsprechend steuert.

Bei einem alternativen Ausführungsbeispiel erfolgt bei der Simulation lediglich eine Grobeineinstellung der Prozessparameter. Die Feineinstellung der Prozesspammetet erfolgt - im Anschluß an die Simulation - mit Hilfe eines den herkömmlichen "Trial and Error"-Verfahren entsprechenden "Trial and Ettor"-Verfahrens (d.h., indem mit Hilfe von Fahrzeugkarosserie-Prototypen an den Beatbeitungs-Stufen 3a, 3b, 3c, 3d entsprechende Versuchsreihen durchgefiihrt werden).

Zur Simulation der Oberflächenbehaadlungs-Vorgäage wird ein Finite-Element-Modell 30 der jeweiligen Fahrzeugkarosserie 2a, 2b, 2c verwendet (vorzugsweise wird hier bei der Simulation mehrerer, insbesondere sämtlicher untersuchter Oberflächen behandlungs- Vorgänge ein- und dasselbe Finite-Element-Modell verwendet). Um dieses zu erzeugen, kann ein (zur Berechnung bzw. Simulation anderer Größen, z.B. der mechanischen Beanspruchung der Fahrzeugkarosserie 2a, 2b, 2c verwendetes) Rechennetz verwendet werden, welches in die Speichereinrichtung 13 des Rechners 12 eingelesen wird.

Das Mechanik-Simulations-Rechennetz wird dann so angepasst, dass es - wie hier - zur Simulation der o.g. Oberflächenbehandlungs-Vorgänge verwendet werden kann.

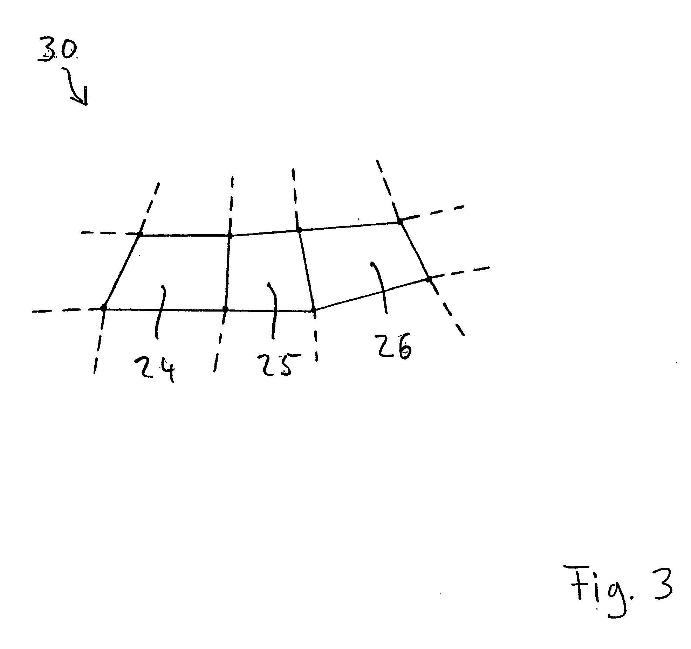

Beim zur Simulation verwendeten Finite-Elemente-Modell 30 der jeweiligen Fahrzeugkarosserie 2a, 2b, 2c sind gemäß Figur 3 die Fahrzeugkarosserieflä,chen jeweils in eine Vielzahl von jeweils zwischen mehreren, z.B. drei oder vier Bezugspunkten aufgespannten, aneinander angrenzende (z.B. ebene) Bezugsflächen unterteilt (finite Karosserieflächen-Elemente 24, 25, 26 bzw. "Zeilen").

Des weiteren werden zur Simulation der Oberflüchenbehandlungs-Vorgänge vom Rechner 12 (Finite-Elemente-)Modelle der jeweiligen Bearbeitungs-Stufen 3a, 3b, 3c, 3d, 3e, 3f verwendet, z.B. ein Modell des Ofens 4, ein Modell des Roboters 20, etc.

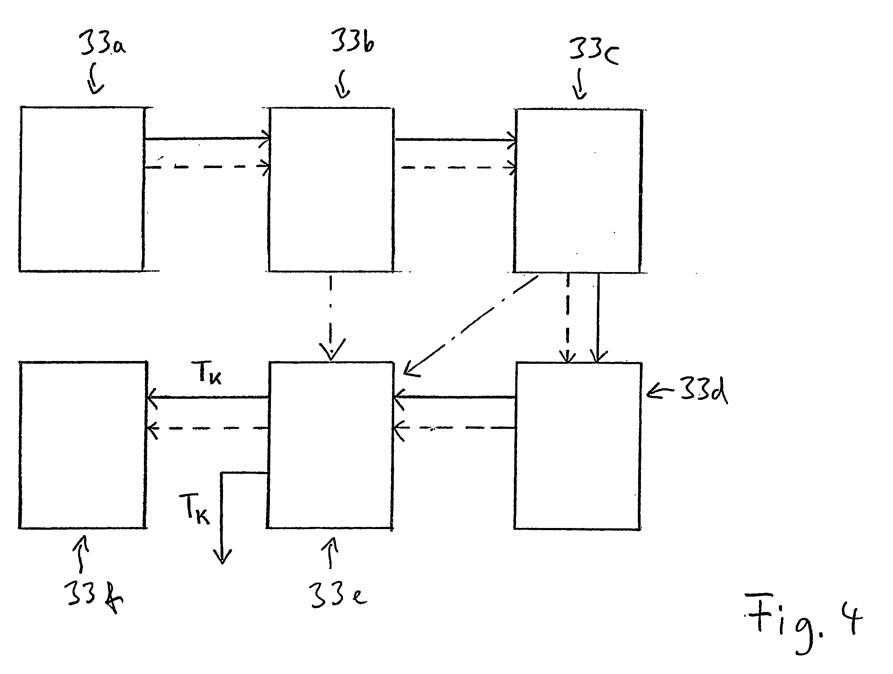

Wie in Figur 4 gezeigt ist, weist das - auf der Speicheteinnchtung 13 abgespeicherte - Simulations-Softwareprogramm (oder altemativ: das kombinierte Simulations-/Steuenzags- - Softwareprogramm) eine Vielzahl von Software-Modulen 33a, 33b, 33c, 33d, 33e, 33f auf.

Jedes Software-Modul 33a, 33b, 33c, 33d, 33e, 33f dient der Simulation der in einer bestimmten Beatbeitungs-Stufe 3a, 3b, 3c, 3d, 3e, 3f stattfindenden Karossetieoberflä.chen-Behandluags-Prozesse (z.B. dient das Software-Modul 33a der Simulation des in der Bearbei tungs-Stufe 3a stattfindenden KarossetieoberMchen-Behandlungs-Prozesses, das Software-Modul 33b der Simulation des in der Bearbeitungs-Stufe 3b stattfindenden Karossetieobetflächen-Behandlungs-Prozesses, das Softwate-Modul 33c der Simulation des in der Bearbeitungs-Stufe, 3c stattfindenden Karossetieoberflächea-Bebandlungs-Prozesses, das Software-Modul 33d der Simulation des in der Bearbeitungs-Stufe 3d stattfindenden Karosserieoberflächen-Behandlungs-Prozesses, usw.).

Jedes Software-Modul 33a, 33b, 33c, 33d, 33e, 33f ist so programmiert, dass es alternativ auch unabhängig von den bzw. ohne die anderen Software-Module(n) auf die Speichetereinrichtung 13 geladen, und/oder selbständig - d.h. unabhängig von den anderen Software-Modulen- zur Simulation des in der dem jeweiligen Software-Modul 33a, 33b, 33c, 33d, 33e, 33f zugeordneten Beatbeitungs-Stufe 3a, 3b, 3c, 3d, 3e, 3f stattfindenden Karosserieoberflächen-Behandlungs-Prozesses verwendet werden kann.

Alternativ können z.B. jeweils mehrere (z.B. zwei oder drei) verschiedene Software-Module 33a, 33b, 33c, 33d, 33e, 33f unabhängig von den bzw. ohne die übrigen Software-Module(n) auf die Speichereinrichtung 13 geladen, und/ oder selbständig - d.h. unabhängig von den übrigen Software-Modulen- zur Simulation der in den den jeweiligen Software-Modulen 33a, 33b, 33c, 33d, 33e, 33f zugeordneten Bearbeitungs-Stufen 3a, 3b, 3c, 3d, 3e, 3f stattfindenden Karosserieoberflächen-Behandlungs-prozesse verwendet werden.

Bei der Erfindung ist erkannt worden, dass die in den einzelnen Bearbeitungs-Stufen 3a, 3b, 3c, 3d, 3e, 3f stattfindenden Karosserieoberflächen-Behandlungs-Prozesse nicht voneinander unabhängig sind, sondern sich wechselseitig beeinflussen können.

Beispielsweise beeinflusst der bei der Simulation des in der Bearbeitungs-Stufe 3e stattfindenden Trocknungsbzw. Aushättungsvorgangs ermittelte Karosserie-Temperaturwert $T_K$ (bzw. beeinflussen die verschiedenen, für die einzelnen finiten Karosserieflächen-Elemente 24, 25, 26 ermittelten Temperaturwerte) den in der darauffolgenden Bearbeitungs-Stufe 3f stattfindenden Beschichtungs- bzw. Lackierprozess. Deshalb wird gemäß Figur 4 der entsprechende Temperaturwert $T_K$ bzw. ein die Temperaturen sämtlicher oder ausgewählter finiter Karosserieflächen-Elemente 24, 25, 26 beschreibender Tempetaturwerte-Vektor $T_K$) vom Software-Modul 33e an das Software-Modul 33f übergeben (und/ oder alternativ auch an weitere, den entsprechenden Parameter verwendende Software-Module). Der entsprechende Temperaturwert $T_K$ bzw. der Temperatutwerte-Vektor $T_K$ wird dann vom Software-Modul 33f zur Durchführung der Simulation des in der Bearbeitungs-Stufe 3f stattfindenden Beschichtungs- bzw. Lackierprozess verwendet

Ein weiteres Beispiel für eine wechselseitige Beeinflussung zwischen verschiedenen Karosserieoberflächen-Behandlungs-Prozessen sind sog. Verschleppungen. Beispielsweise können die o.g. Reinigungsbecken, Lackwannen, etc. einer bestimmten Bearbeitungs-Stufe durch (aufgrund von in vorangegangenen Bearbeitungs-Stufen durchgeführten Prozessen noch auf der Fahrzeugkarosserie 2a, 2b, 2c bzw. in Karosseriehohltäumen befindlichem) flüssigen Lack bzw. Reinigungsflüssigkeitsreste verschmutzt werden.

Deshalb kann ein oder können mehrere die Verschmutzung bzw. Verschleppung beschreibende Parameter z.B. von dem entsprechenden, der jeweiligen die Verschleppung verursachenden Bearbeitungs-Stufe zugeordneten Software-Modul an das entsprechende, den darauffolgenden Lackierungs- oder Reinigungprozeß simulierende Software-Modul übergeben werden. Die entsprechenden Parameter werden dann - ggf. zusammen mit vielen weiteren Parametern - vom Lackierungs- bzw. Reinigungprozeß-Simulations-Modul zur Simulation des Lackierungs- bzw. Reinigungprozesses verwendet

## Patentansprüche

1.    Verfahren zur Simulation von Kraftfahrzeug-Karosserie-Oberflächenbehandlungs- bzw. -Oberflächenbehandlungs-Vorbereitungs- bzw. -Nachbehandlungs-Prozessen, wobei an einem Karosserie-Körper (2a, 2b, 2c) nacheinander mehrere, verschiedene Oberflächenbehandlungs- bzw. Oberflächenbehandlungs-Vorbereitungs- bzw. -Nachbehandlungs-Prozess-Teilschritte vorgenommen werden, und wobei mindesten ein bei der Simulation des bei einem ersten Oberflächenbehandlungs- bzw. Oberflächenbehandlungs-Vorbereitungs- bzw.-Nachbehandlungs-Prozess-Teilschritts ermittelter Parameter ($T_K$) zur Simulation eines zweiten Oberflächenbehandlungs- bzw. Oberflächenbehandlungs-Vorbereitungs- bzw.-Nachbehandlungs-Prozess-Teilschritts verwendet wird.

2.    Verfahren nach Anspruch 1, wobei der erste Prozess-Teilschritt an einer ersten Bearbeitungs-Stelle (3a), und der zweite Prozess-Schritt an einer örtlich von der ersten Bearbeitungs-Stelle (3a) getrennten Bearbeitungs-Stelle (3b) durchgeführt wird.

3.    Verfahren nach Anspruch 2, wobei an der ersten und/oder zweiten Bearbeitungs-Stelle (3a, 3b) zusätzlich zum ersten bzw. zweiten Prozess-Teilschritt noch ein oder mehrere weitere Prozess-Teilschritte durchgeführt werden.

4.    Verfahren nach Anspruch 2 oder 3, wobei der Karosserie-Körper (2a, 2b, 2c) von einer separaten Transporteinrichtung (10) von der ersten Bearbeitungs-Stelle (3a) zur zweiten Bearbeitungs-Stelle (3b) befördert wird.

5.    Verfahren nach einem der vorhergehenden Ansprüche, wobei der erste Prozess-Teilschritt ein Reinigungsverfahrens-Schritt ist.

6.    Verfahren nach einem der Ansprüche 1 bis 4, wobei der erste Prozess-Teilschritt ein Beschichtungsverfahrens-Schritt ist.

**7.** Verfahren nach einem der Ansprüche 1 bis 4, wobei der erste Prozess-Teilschritt ein Beiz-, insbesondere ein Galvanik-Beiz-Verfahrens-Schritt ist.

**8.** Verfahren nach einem der Ansprüche 1 bis 4, wobei der erste Prozess-Teilschritt ein Trocknungs- bzw. Aushärtungsverfaluens-Schritt ist.

**9.** Verfahren nach einem der vorhergehenden Ansprüche, wobei der zweite Prozess-Teilschritt ein Reinigungsverfahrens-Schritt ist.

**10.** Vorrichtung (11) zur Simulation von Kraftfahrzeug-Karosserie-Oberflächenbehandlungs- bzw. -Oberflächenbehandlungs-Vorbereitungs- bzw.-Nachbehandlungs-Prozessen, welche so ausgestaltet und eingerichtet ist, dass durch sie ein Simulations-Verfahren nach einem der Ansprüche 1 bis 9 ausgeführt werden kann.

**Claims**

**1.** A method for simulating vehicle carriage surface treating and/or surface treating preparatory and/or post treatment processes, wherein a plurality of different surface treating and/or surface treating preparatory and/or post treatment process partial steps are performed successively on a carriage body (2a, 2b, 2c), and wherein at least one parameter ($T_K$) determined during the simulation of a first surface treating and/or surface treating preparatory and/or post treatment process partial step is used for simulating a second surface treating and/or surface treating preparatory and/or post treatment process partial step.

**2.** The method according to claim 1, wherein the first process partial step is performed at a first processing place (3a) and the second process step is performed at a processing step (3b) that is locally separated from said first processing place (3a).

**3.** The method according to claim 2, wherein, at said first and/or second processing place(s) (3 a, 3b), one or a plurality of further process partial steps are performed in addition to the first and/or second process partial step(s).

**4.** The method according to claims 2 or 3, wherein said carriage body (2a, 2b, 2c) is transported by a separate transport means (10) from said first processing place (3a) to said second processing place (3b).

**5.** The method according to any of the preceding claims, wherein said first process partial step is a cleaning method step.

**6.** The method according to any of claims 1 to 4, wherein said first process partial step is a coating method step.

**7.** The method according to any of claims 1 to 4, wherein said first process partial step is a pickling method step, in particular an electroplating pickling method step.

**8.** The method according to any of claims 1 to 4, wherein said first process partial step is a drying or thermosetting method step.

**9.** The method according to any of the preceding claims wherein said second process partial step is a cleaning method step.

**10.** A device (11) for simulating vehicle carriage surface treating and/or surface treating preparatory and/or post treatment processes, said device being designed and configured such that it is adapted to perform a simulating method according to any of claims 1 to 9.

**Revendications**

**1.** Procédé de simulation de processus de traitement de surface, de pré-traitement de surface ou de post-traitement de surface de carrosserie de véhicules automobiles, dans lequel plusieurs étapes partielles différentes de processus de traitement de surface, de pré-traitement de surface ou de post-traitement de surface sont successivement réalisées sur une coque de carrosserie (2a, 2b, 2c), et dans lequel au moins un paramètre ($T_K$), déterminé lors de la simulation d'une première étape partielle du processus de traitement de surface, de pré-traitement de surface ou de post-traitement de surface, est utilisé pour la simulation d'une deuxième étape partielle du processus de traitement de surface, de pré-traitement de surface ou de post-traitement de surface.

2. Procédé selon la revendication 1, dans lequel la première étape partielle du processus est réalisée dans un premier lieu d'usinage (3a) et la deuxième étape partielle du processus est réalisée dans un lieu d'usinage (3b) séparé spatialement du premier lieu d'usinage (3a).

3. Procédé selon la revendication 2, dans lequel une ou plusieurs autres étapes partielles du processus sont réalisées dans le premier et/ou le deuxième lieu d'usinage (3a, 3b), en plus de la première ou deuxième étape partielle du processus.

4. Procédé selon la revendication 2 ou 3, dans lequel la coque de carrosserie (2a, 2b, 2c) est amenée par un dispositif de transport séparé (10) du premier lieu d'usinage (3a) au deuxième lieu d'usinage (3b).

5. Procédé selon l'une quelconque des revendications précédentes, dans lequel la première étape partielle du processus est une étape d'un procédé de nettoyage.

6. Procédé selon l'une quelconque des revendications 1 à 4, dans lequel la première étape partielle du processus est une étape d'un procédé de revêtement.

7. Procédé selon l'une quelconque des revendications 1 à 4, dans lequel la première étape partielle du processus est une étape d'un procédé de décapage, en particulier une étape d'un procédé de décapage électrolytique.

8. Procédé selon l'une quelconque des revendications 1 à 4, dans lequel la première étape partielle du processus est une étape d'un procédé de séchage ou de durcissement.

9. Procédé selon l'une quelconque des revendications précédentes, dans lequel la deuxième étape partielle du processus est une étape d'un procédé de nettoyage.

10. Dispositif (11) de simulation de processus de traitement de surface, de pré-traitement de surface ou de post-traitement de surface de carrosserie de véhicules automobiles, lequel est conçu et réglé de telle manière qu'il permet de réaliser un procédé de simulation selon l'une quelconque des revendications 1 à 9.

Fig. 1

Fig. 2

EP 1 468 338 B1

Fig. 3

Fig. 4

EP 1 468 338 B1